# FASCICULE DE BREVET EUROPEEN

(11) **EP 0 560 702 B1**
(45) Date de publication et mention de la délivrance du brevet: **19.08.1998**
(21) Numéro de dépôt: 93440025.0
(22) Date de dépôt: 26.02.1993
(51) Int. Cl.: E04H 3/22, E04B 1/99, E04B 1/86, B32B 13/14, E04B 2/74, E04B 9/00

(54) **Studio d'enregistrement audio-vidéo ou salle de concert**
Audio-Video Aufnahmeraum oder Konzertsaal
Audio-video recording studio or concert hall

(30) Priorité: 09.03.1992 FR 9202928
(43) Date de publication de la demande: 15.09.1993
(73) Titulaire: CLESTRA HAUSERMAN, S.A., F-67200 Strasbourg-Koenigshoffen (FR); Südwestfunk Media GmbH, 76530 Baden-Baden (DE)
(72) Inventeur: Richard, Claude, F-67000 Strasbourg (FR); Mauriange, Bernard, F-67000 Strasbourg (FR); Reinart, Josef, D-55294 Bodenheim (DE); Dietz, Manfred, D-77830 Bühlertal (DE); Rossmann, Gerd, D-76547 Sinzheim (DE)
(74) Mandataire: Nuss, Pierre

(56) Documents cités:
- DE-A- 3 629 863
- DE-C- 708 417
- GB-A- 510 522
- GB-A- 1 496 516
- US-A- 3 095 943
- TOYOSHIMA ET AL. 'Control Room Acoustic Design' 7 Mars 1986 , AES , MONTREUX, SUISSE

## Description

La présente invention concerne le domaine de la réalisation de locaux devant présenter des caractéristiques acoustiques particulières en vue de leur utilisation comme studio audio-vidéo ou encore comme salle de concert et a pour objet un tel studio ou une telle salle.

L'installation de studios d'enregistrement ou de salles de concert est généralement effectuée dans des locaux préalablement érigés en béton ou en maçonnerie, spécialement à cet effet, ou encore, en particulier dans le cas de locaux destinés à des émissions radio ou de télévision, dans des locaux existants. Une telle installation nécessite la mise en place d'une seconde maçonnerie dans les différentes pièces, en doublage des murs et plafonds existants, avec prévision d'un vide d'air entre lesdits murs et plafonds, les planchers étant recouverts de faux-planchers flottants montés sur ressorts.

Cette seconde maçonnerie peut être remplacée par une structure métallique pourvue d'un remplissage de briques ou de blocs de béton cellulaire.

Ensuite, la structure interne ainsi obtenue est pourvue d'habillages pour le traitement acoustique du studio ou de la salle, pour le décor, ainsi que pour l'intégration de tous les circuits techniques.

La réalisation de cette deuxième structure et de ses habillages est destinée à obtenir des performances d'isolement acoustique visant à réduire la transmission sonore de l'ordre de 60 dB à 80 dB.

Les constructions existantes présentent à cet effet l'inconvénient d'être lourdes et le résultat obtenu reste figé, c'est-à-dire qu'il est impossible d'adapter la réduction sonore en fonction d'une utilisation donnée et, dans le cas d'un défaut d'isolement, il est nécessaire de détruire totalement la structure interne.

Enfin, la mise au point de l'isolement de tels studios ou salles est très délicate.

On connaît, en outre, de DE-C-708 417 un studio ou salle de concert installé dans un bâtiment et constitué sous forme d'une structure interne réalisée, d'une part, de panneaux de cloisons montés, certains à même le plancher, et d'autres sur une infrastructure porteuse, et d'éléments absorbeurs ou diffuseurs rajoutés sur ces panneaux et, d'autre part, d'un plafond également constitué par des panneaux de cloisons interchangeables fermant l'espace supérieur de la structure.

Mais une telle construction représente une solution lourde qui ne permet que de résoudre partiellement le problème de la correction acoustique et qui ne permet absolument pas de résoudre les problèmes d'isolation des bruits aériens et solidiens.

La présente invention a pour but de pallier ces inconvénients.

Elle a, en effet, pour objet un studio d'enregistrement audio-vidéo ou salle de concert installé dans un bâtiment en béton ou en maçonnerie et constitué sous forme d'une structure interne, réalisée par assemblage sur chantier, d'une part, de cloisons constituées par des panneaux de cloison interchangeables directement pourvus d'un habillage de finition et montés sur une infrastructure porteuse et par des éléments absorbeurs ou diffuseurs intégrés dans les panneaux ou rajoutés sur ces derniers, et, d'autre part, d'un plafond également constitué par des panneaux de cloison interchangeables fermant l'espace supérieur de la structure, caractérisé en ce que le studio ou la salle comporte une chape flottante permettant une absorption des vibrations éventuelles provenant de la structure du bâtiment et supportant l'infrastructure porteuse de constitution légère, celle-ci étant formée par des éléments profilés d'accrochage ou de fixation des panneaux, intégrés ou extérieurs à ces derniers, lesdits éléments profilés étant pourvus, sur deux faces opposées, de crémaillères d'accrochage des éléments absorbeurs ou diffuseurs et/ou des panneaux.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation et en coupe d'un studio ou d'une salle de concert conforme à l'invention, et
la figure 2 est une vue en élévation latérale et en coupe, à plus grande échelle, d'un panneau de cloison.

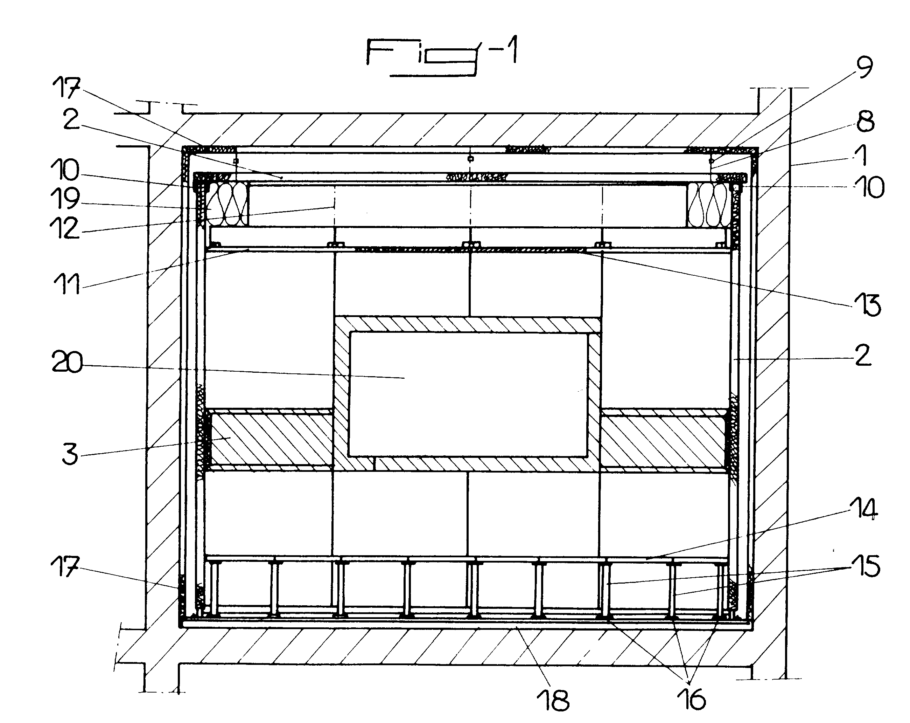

La figure 1 des dessins annexés représente un studio d'enregistrement audio-vidéo ou une salle de concert installé dans un bâtiment 1 en béton ou en maçonnerie et constitué sous forme d'une structure interne.

Conformément à l'invention, le studio ou la salle comporte une chape flottante 18 permettant une absorption des vibrations éventuelles provenant de la structure du bâtiment 1 et supportant l'infrastructure porteuse de constitution légère, celle-ci étant formée par des éléments profilés d'accrochage ou de fixation des panneaux 2, intégrés ou extérieurs à ces derniers, lesdits éléments profilés étant pourvus, sur deux faces opposées, de crémaillères d'accrochage des éléments absorbeurs ou diffuseurs 3 et/ou des panneaux 2.

Ainsi, l'invention propose le remplacement de la maçonnerie intérieure utilisée jusqu'à ce jour et de l'habillage réalisé consécutivement, par des panneaux de cloison finis en usine et assurant la fonction de cloison, la fonction d'isolement et la fonction de décor. Ces panneaux doivent permettre, en outre, une adaptation acoustique au besoin, du fait même de leur constitution ou par la possibilité d'interchanger des éléments absorbeurs ou diffuseurs 3 intégrés ou rajoutés.

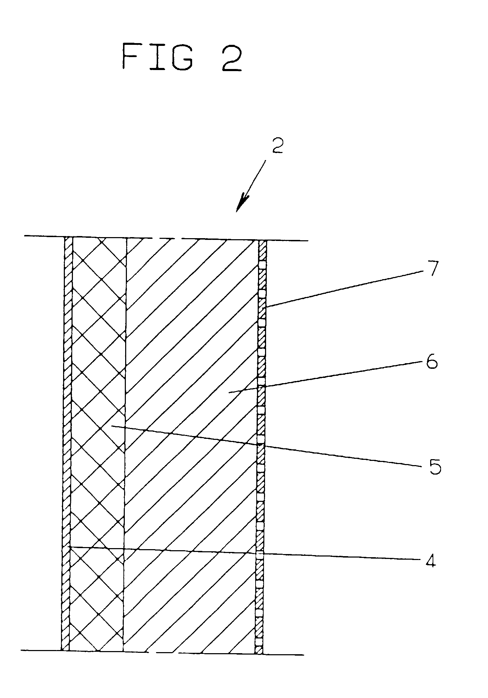

Comme le montre la figure 2 les panneaux de cloison interchangeables 2 sont avantageusement réalisés sous forme de panneaux-sandwich disymétriques constitués chacun par une première tôle pleine d'habillage 4 recouverte par une plaque de plâtre 5, par une couche de laine minérale 6 et par une deuxième tôle perforée d'habillage 7 recouvrant la couche 6 et reliée à la première tôle pleine 4 par assemblage de leurs rebords, par vissage, par soudure, par rivetage ou autre, sur une infrastructure porteuse intégrée dans le panneau ou extérieure à ce dernier.

Une telle constitution des panneaux 2 permet leur montage dans les deux sens, c'est-à-dire, soit avec la tôle perforée tournée vers l'intérieur du studio ou de la salle, soit avec la tôle pleine, afin de modifier ou d'adapter l'effet acoustique.

Selon une variante de réalisation de l'invention, les panneaux 2 peuvent également présenter plusieurs couches de plâtre 5 et de laine minérale 6 alternées, la tôle d'habillage pleine 4 étant toujours recouverte d'une couche de plâtre 5 et la tôle d'habillage perforée 7 recouvrant toujours une couche de laine minérale 6. Une telle constitution permet, à épaisseur de cloison égale, une amélioration des performances acoustiques.

L'infrastructure porteuse est constituée par des poteaux métalliques d'accrochage ou de fixation des panneaux 2 et des éléments absorbeurs ou diffuseurs 3, ces poteaux étant constitués sous forme d'éléments profilés pourvus, sur deux faces opposées, de crémaillères d'accrochage des éléments absorbeurs ou diffuseurs 3 et/ou des panneaux 2.

La prévision de crémaillères d'accrochage permet, en outre, la fixation d'étagères ou analogues pour la mise en place de matériel électronique ou autre. De plus, ces crémaillères permettent de modifier très rapidement l'agencement des éléments annexes tels que les étagères ou les éléments absorbeurs ou diffuseurs 3, en vue de modifier les caractéristiques acoustiques ou simplement la disposition de certains éléments.

Les panneaux de cloison interchangeables 2 formant le plafond de la structure interne conforme à l'invention sont reliés au plafond du bâtiment 1 par l'intermédiaire de suspensions 8 munies chacune d'un élément amortisseur 9 en caoutchouc ou sous forme de ressort et s'appuient au niveau des cloisons verticales sur les bords supérieurs des panneaux verticaux 2 avec interposition de joints 10.

Le plafond de la structure interne est avantageusement complété, en outre, par une structure décorative 11 constituée par des panneaux en tôle perforée suspendus au moyen d'attaches 12 sous le plafond formé par les panneaux 2.

Selon une variante de réalisation de l'invention, la structure décorative 11 peut être pourvue en un ou plusieurs endroits d'un matelas de laine minérale 13 recouvrant totalement ou partiellement l'intérieur d'un ou de plusieurs panneaux le constituant. Il est ainsi possible de réaliser un traitement acoustique complémentaire en des endroits prédéterminés du plafond, notamment au-dessus d'une zone d'enregistrement, afin d'éviter, notamment, des réverbérations nuisibles.

Conformément à une autre variante de réalisation de l'invention, non représentée aux dessins annexés, le plafond peut être pourvu d'éléments absorbeurs ou réfléchissants montés en lieu et place d'un ou de plusieurs panneaux décoratifs de la structure 11 ou intégrés dans les panneaux 2 ou accrochés aux suspentes de ces derniers et traversant la structure décorative 11. Ainsi, il est possible de modifier à tout instant les caractéristiques d'isolement et/ou d'absorption ou de réflexion du plafond de la structure interne en fonction des besoins.

Selon une autre caractéristique de l'invention, l'espace entre les panneaux de cloison interchangeables 2 formant le plafond de la structure interne et la structure décorative 11 peut être rempli, totalement ou partiellement, d'une couche 19 de matière isolante. Ainsi, les capacités d'absorption du plafond de la structure interne peuvent encore être améliorées.

Dans sa partie inférieure, la structure interne est équipée d'un faux-plancher surélevé 14 monté, au moyen d'une structure porteuse 15, sur des amortisseurs 16 s'appuyant sur la dalle du bâtiment 1.

Selon une autre caractéristique de l'invention, et comme le montre la figure 1 des dessins annexés, le plafond et les parois du bâtiment 1 sont avantageusement pourvus, sur leur face tournée vers la structure interne, d'une couche de revêtement isolant 17 en laine minérale, tandis que la dalle de réception du faux-plancher 14 est munie d'une chape flottante 18. Un tel mode de réalisation permet une absorption des réverbérations provenant aussi bien de l'extérieur du bâtiment 1 que de l'intérieur de la structure interne, ainsi qu'une absorption des vibrations éventuelles provenant de la structure du bâtiment 1.

Enfin, les gaines techniques et les câblages peuvent facilement être disposés, de manière connue, soit sous le plancher surélevé 14, soit dans l'espace délimité par les parois et le plafond du bâtiment 1 et la structure interne.

Par ailleurs, les passages entre deux pièces voisines sont traités, de manière connue, par prévision de portes et d'embrasures de portes adaptées aux critères d'isolement requis. Il en est de même en ce qui concerne les baies vitrées de séparation 20 entre un studio et une cabine technique. Ces éléments ne sont pas traités en détails, étant connus de l'homme du métier.

Grâce à l'invention, il est possible de réaliser un studio d'enregistrement audio-vidéo ou une salle de concert, pouvant facilement être adapté à divers critères ou configurations en fonction des besoins ou des évolutions, par simple modification de la disposition de ses éléments de parois et/ou de plafond par interversion de ces éléments entre eux. En effet, du fait de la disymétrie existant dans chaque panneau de cloison 2, il est possible, par simple retournement d'un tel panneau autour de son axe vertical, d'obtenir des performances d'isolement différentes et donc d'adapter une cloison, éventuellement par paliers, à de nouvelles exigences d'isolement, ceci sans nécessiter une destruction desdites cloisons et avec un coût de main d'oeuvre relativement faible, les travaux pouvant être effectués en un temps relativement court.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, défini par les revendications.

## Revendications

1. Studio d'enregistrement audio-vidéo ou salle de concert installé dans un bâtiment (1) en béton ou en maçonnerie et constitué sous forme d'une structure interne, réalisée par assemblage sur chantier, d'une part, de cloisons constituées par des panneaux de cloison interchangeables (2) directement pourvus d'un habillage de finition et montés sur une infrastructure porteuse et par des éléments absorbeurs ou diffuseurs (3) intégrés dans les panneaux (2) ou rajoutés sur ces derniers, et, d'autre part, d'un plafond également constitué par des panneaux de cloison interchangeables (2) fermant l'espace supérieur de la structure, caractérisé en ce que le studio ou la salle comporte une chape flottante (18) permettant une absorption des vibrations éventuelles provenant de la structure du bâtiment (1) et supportant l'infrastructure porteuse de constitution légère, celle-ci étant formée par des éléments profilés d'accrochage ou de fixation des panneaux (2), intégrés ou extérieurs à ces derniers, lesdits éléments profilés étant pourvus, sur deux faces opposées, de crémaillères d'accrochage des éléments absorbeurs ou diffuseurs (3) et/ou des panneaux (2).

2. Studio ou salle, suivant la revendication 1, caractérisé en ce que les panneaux de cloison interchangeables (2) sont avantageusement réalisés sous forme de panneaux-sandwich disymétriques constitués chacun par une première tôle pleine d'habillage (4) recouverte par une plaque de plâtre (5), par une couche de laine minérale (6) et par une deuxième tôle perforée d'habillage (7) recouvrant la couche (6) et reliée à la première tôle pleine (4) par assemblage de leurs rebords, par vissage, par soudure, par rivetage ou autre, sur une infrastructure porteuse intégrée dans le panneau ou extérieure à ce dernier.

3. Studio ou salle, suivant la revendication 1, caractérisé en ce que les panneaux (2) présentent plusieurs couches de plâtre (5) et de laine minérale (6) alternées, la tôle d'habillage pleine (4) étant toujours recouverte d'une couche de plâtre (5) et la tôle d'habillage perforée (7) recouvrant toujours une couche de laine minérale (6).

4. Studio ou salle, suivant la revendication 1, caractérisé en ce que les panneaux de cloison interchangeables (2) formant le plafond de la structure interne sont reliés au plafond du bâtiment (1) par l'intermédiaire de suspensions (8) munies chacune d'un élément amortisseur (9) en caoutchouc ou sous forme de ressort et s'appuient au niveau des cloisons verticales sur les bords supérieurs des panneaux verticaux (2) avec interposition de joints (10).

5. Studio ou salle, suivant l'une quelconque des revendications 1 et 4, caractérisé en ce que le plafond de la structure interne est avantageusement complété, en outre, par une structure décorative (11) constituée par des panneaux en tôle perforée suspendus au moyen d'attaches (12) sous le plafond formé par les panneaux (2).

6. Studio ou salle, suivant la revendication 5, caractérisé en ce que la structure décorative (11) est pourvue en un ou plusieurs endroits d'un matelas de laine minérale (13) recouvrant totalement ou partiellement l'intérieur d'un ou de plusieurs panneaux le constituant.

7. Studio ou salle, suivant l'une quelconque des revendications 1 et 4 à 6, caractérisé en ce le plafond est pourvu d'éléments absorbeurs ou réfléchissants montés en lieu et place d'un ou de plusieurs panneaux décoratifs de la structure (11) ou intégrés dans les panneaux (2) ou accrochés aux suspentes de ces derniers et traversant la structure décorative (11).

8. Studio ou salle, suivant l'une quelconque des revendications 1 et 4 à 7, caractérisé en ce que l'espace entre les panneaux de cloison interchangeables (2) formant le plafond de la structure interne et la structure décorative (11) est rempli, totalement ou partiellement, d'une couche (19) de matière isolante.

9. Studio ou salle, suivant la revendication 1, caractérisé en ce que, dans sa partie inférieure, la structure interne est équipée d'un faux-plancher surélevé (14) monté, au moyen d'une structure porteuse (15), sur des amortisseurs (16) s'appuyant sur la dalle du bâtiment (1).

10. Studio ou salle, suivant la revendication 1, caractérisé en ce que le plafond et les parois du bâtiment (1) sont avantageusement pourvus, sur leur face tournée vers la structure interne, d'une couche de revêtement isolant (17) en laine minérale, tandis que la dalle de réception du faux-plancher (14) est munie d'une chape flottante (18).

## Patentansprüche

1. Ton- und Video-Aufnahmestudio oder Konzertsaal, welches/welcher in einem Gebäude (1) aus Beton oder Mauerwerk eingebaut ist und als eine innere Anordnung ausgebildet ist, die durch Montage vor Ort realisiert wird, und zwar einerseits aus Trennwänden, die aus auswechselbaren Trennplatten (2), welche direkt mit einer fertiggestellten Verkleidung versehen sind und auf einen tragenden Unterbau montiert sind, und aus in die Platten (2) integrierten oder auf letzteren angebrachten absorbierenden oder Diffusor-Elementen (3) bestehen, und andererseits aus einer Decke, die ebenfalls aus auswechselbaren Trennplatten (2) besteht, welche den oberen Raum der Anordnung abschließen, dadurch gekennzeichnet daß das Studio oder der Saal einen schwimmenden Estrich (18) aufweist, der eine Absorption der eventuellen Schwingungen, die von der Struktur des Gebäudes (1) herrühren, gestattet und den tragenden Unterbau von leichter Beschaffenheit trägt, wobei dieser von Profilelementen zum Einhaken oder Befestigen der Platten (2) gebildet wird, welche integriert sind oder sich außerhalb von diesen letzteren befinden, wobei die Profilelemente auf zwei gegenüberliegenden Seiten mit Zahnstangen zum Einhaken der absorbierenden oder Diffusor-Elemente (3) und/oder der Platten (2) versehen sind.

2. Studio oder Saal nach Anspruch 1, dadurch gekennzeichnet, daß die auswechselbaren Trennplatten (2) vorteilhafterweise als asymmetrische Sandwich-Platten ausgebildet sind, die jeweils aus einem ersten, massiven Verkleidungsblech (4) bestehen, welches von einer Gipsplatte (5), von einer Steinwolleschicht (6) und von einem zweiten, gelochten Verkleidungsblech (7) bedeckt wird, wobei das zweite Verkleidungsblech die Schicht (6) abdeckt und mit dem ersten, massiven Verkleidungsblech (4) durch Befestigung ihrer Ränder mittels Verschraubung, Schweißen, Nieten oder anderem auf einem tragenden Unterbau verbunden ist, welcher in die Platte integriert ist oder sich außerhalb von dieser letzteren befindet.

3. Studio oder Saal nach Anspruch 1, dadurch gekennzeichnet, daß die Platten (2) mehrere abwechselnde Gips- (5) und Steinwolleschichten (6) aufweisen, wobei das massive Verkleidungsblech (4) immer von einer Gipsschicht (5) abgedeckt ist und das gelochte Verkleidungsblech (7) immer eine Steinwolleschicht (6) abdeckt.

4. Studio oder Saal nach Anspruch 1, dadurch gekennzeichnet, daß die auswechselbaren Trennplatten (2), welche die Decke der inneren Anordnung bilden, mit der Decke des Gebäudes (1) mittels Aufhängungen (8) verbunden sind, die jeweils mit einem Dämpfungselement (9) aus Gummi oder in Form einer Federung versehen sind und auf der Höhe der vertikalen Trennwände über Fugen (10) auf die oberen Kanten der vertikalen Platten (2) drücken.

5. Studio oder Saal nach einem der Ansprüche 1 und 4, dadurch gekennzeichnet, daß die Decke der inneren Anordnung vorteilhafterweise überdies durch eine dekorative Anordnung (11) vervollständigt wird, die aus gelochten Blechplatten besteht, welche mittels Befestigungsmitteln (12) unter der von den Platten (2) gebildeten Decke aufgehängt sind.

6. Studio oder Saal nach Anspruch 5, dadurch gekennzeichnet, daß die dekorative Anordnung (11) an einer oder mehreren Stellen mit einer Matte aus Steinwolle (13) versehen ist, die vollständig oder teilweise das Innere von einer oder mehreren Platten, welche sie enthalten, ausfüllt.

7. Studio oder Saal nach einem der Ansprüche 1 und 4 bis 6, dadurch gekennzeichnet, daß die Decke mit absorbierenden oder reflektierenden Elementen versehen ist, die anstelle einer oder mehrerer dekorativer Platten der Anordnung (11) montiert sind oder in die Platten (2) integriert sind oder in die Aufhängungen dieser letzteren eingehakt sind und die dekorative Anordnung (11) durchqueren.

8. Studio oder Saal nach einem der Ansprüche 1 und 4 bis 7, dadurch gekennzeichnet, daß der Raum zwischen den auswechselbaren Trennplatten (2), welche die Decke der inneren Anordnung bilden, und der dekorativen Anordnung (11) völlig oder teilweise mit einer Schicht (19) aus isolierendem Material ausgefüllt ist.

9. Studio oder Saal nach Anspruch 1, dadurch gekennzeichnet, daß die innere Anordnung in ihrem unteren Teil mit einem erhöhten Bodenaufbau (14) ausgestattet ist, der mittels einer tragenden Anordnung (15) auf Dämpfern (16) montiert ist, die auf der Bodenplatte des Gebäudes (1) aufliegen.

10. Studio oder Saal nach Anspruch 1, dadurch gekennzeichnet, daß die Decke und die Wände des Gebäudes (1) vorteilhafterweise auf ihrer der inneren Anordnung zugewandten Seite mit einer isolierenden Verkleidungsschicht (17) aus Steinwolle versehen sind, während die Bodenplatte, die den Bodenaufbau (14) aufnimmt, mit einem schwimmenden Estrich (18) versehen ist.

## Claims

1. Audio-video recording studio or concert hall installed in a building (1) composed of concrete or of brick and made up in the form of an internal structure, produced by the asembly, on site, on the one hand, of partitions consisting of interchangeable partition panels (2) provided directly with a finishing covering and mounted on a load-bearing infrastructure and of absorbing or diffusing elements (3) integrated in the panels (2) or added to them and, on the other hand, of a ceiling also consisting of interchangeable partition panels (2) closing the upper space of the structure, characterized in that the studio or hall comprises a floating screed (18) allowing absorption of the possible vibrations originating from the structure of the building (1) and supporting the load-bearing infrastructure of light constitution, this infrastructure being formed by profiled elements for attaching or fixing the panels (2), integrated in or external thereto, said profiled elements being provided, on two opposing faces, with racks for attachment of the absorbing or diffusing elements (3) and/or panels (2).

2. Studio or hall according to claim 1, characterized in that the interchangeable partition panels (2) are advantageously produced in the form of asymmetrical sandwich panels each consisting of a first solid metal covering sheet (4) covered with a plaster board (5), a layer of mineral wool (6) and a second perforated metal covering sheet (7) covering the layer (6) and connected to the first solid metal sheet (4) by assembly of their edges, by screwing, by welding, by riveting or the like on to a load-bearing infrastructure integrated in the panel or external to the panel.

3. Studio or hall according to claim 1, characterized in that the panels (2) have several alternate layers of plaster (5) and of mineral wool (6), the solid metal covering sheet (4) always being covered by a layer of plaster (5) and the perforated metal covering sheet (7) always covering a layer of mineral wool (6).

4. Studio or hall according to claim 1, characterized in that the interchangeable partition panels (2) forming the ceiling of the internal structure are connected to the ceiling of the building (1) by suspension means (8) each equipped with a damping element (9) made of rubber or in the form of a spring and rest, in the region of the vertical partitions, on the upper edges of the vertical panels (2) with interposition of joints (10).

5. Studio or hall according to any one of claims 1 and 4, characterized in that the ceiling of the internal structure is advantageously completed, moveover, by a decorative structure (11) consisting of panels of perforated metal sheet suspended by fasteners (12) beneath the ceiling formed by the panels (2).

6. Studio or hall according to claim 5, characterized in that the decorative structure (11) is provided, at one or more points, with a pad of mineral wool (13) completely or partially covering the interior of one or more panels forming it.

7. Studio or hall according to any one of claims 1 and 4 to 6, characterized in that the ceiling is provided with absorbing or reflecting elements mounted instead of one or more decorative panels of the structure (11) or integrated in the panels (2) or attached to the suspension posts thereof and traversing the decorative structure (11).

8. Studio or hall according to any one of claims 1 and 4 to 7, characterized in that the space between the interchangeable partition panels (2) forming the ceiling of the internal structure and the decorative structure (11) is filled completely or partially with a layer (19) of insulating material.

9. Studio or hall according to claim 1, characterized in that, in its lower portion, the internal structure is equipped with a raised false floor (14) mounted, by means of a load-bearing structure (15), on damping devices (16) resting on the slab of the building (1).

10. Studio or hall according to claim 1, characterized in that the ceiling and the walls of the building (1) are advantageously provided, on their face turned toward the internal structure, with an insulating coating layer (17) of mineral wool, whereas the slab receiving the false floor (14) is equipped with a floating screed (18).
